(19) Europäisches Patentamt
European Patent Office
Office européen des brevets

(11) **EP 1 508 207 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(21) Anmeldenummer: **03735317.4**

(22) Anmeldetag: **27.05.2003**

(51) Int Cl.:
*H04B 7/06* (2006.01)  *H04B 7/08* (2006.01)

(86) Internationale Anmeldenummer:
**PCT/DE2003/001723**

(87) Internationale Veröffentlichungsnummer:
**WO 2003/101009 (04.12.2003 Gazette 2003/49)**

(54) **VERFAHREN ZUR ÜBERTRAGUNG VON INFORMATIONEN IN EINEM MIMO-FUNKKOMMUNIKATIONSSYSTEM UND FUNKKOMMUNIKATIONSSYSTEM**

METHOD FOR TRANSMITTING INFORMATION IN A MIMO RADIO COMMUNICATION SYSTEM AND RADIO COMMUNICATION SYSTEM

PROCEDE DE TRANSMISSION D'INFORMATIONS DANS UN SYSTEME DE RADIOTELEPHONIE MIMO ET SYSTEME DE RADIOTELEPHONIE ASSOCIE

(84) Benannte Vertragsstaaten:
**AT BE BG CH CY CZ DE DK EE ES FI FR GB GR HU IE IT LI LU MC NL PT RO SE SI SK TR**

(30) Priorität: **27.05.2002 DE 10223564**

(43) Veröffentlichungstag der Anmeldung:
**23.02.2005 Patentblatt 2005/08**

(73) Patentinhaber: **Nokia Siemens Networks GmbH & Co. KG**
**81541 München (DE)**

(72) Erfinder:
• **BAIER, Paul, Walter**
**67661 Kaiserslautern (DE)**
• **JÖTTEN, Christoph, Arnold**
**66687 Wadern (DE)**
• **MEURER, Michael**
**67663 Kaiserslautern (DE)**
• **QIU, Wei**
**67663 Kaiserslautern (DE)**
• **TRÖGER, Hendrik**
**70794 Filderstadt (DE)**

(56) Entgegenhaltungen:
**EP-A- 0 801 473**    **DE-A- 19 850 279**

• **MEURER M ET AL: "Synthesis of joint detection and joint transmission in CDMA downlinks" ELECTRONICS LETTERS, IEE STEVENAGE, GB, Bd. 37, Nr. 14, 5. Juli 2001 (2001-07-05), Seiten 919-920, XP006016835 ISSN: 0013-5194**
• **BAIER P W ET AL: "Joint transmission (JT), an alternative rationale for the downlink of time division CDMA using multi-element transmit antennas" 2000 IEEE SIXTH INTERNATIONAL SYMPOSIUM ON SPREAD SPECTRUM TECHNIQUES AND APPLICATIONS. ISSTA 2000. PROCEEDINGS (CAT. NO.00TH8536), PROCEEDINGS OF INTERNATIONAL IEEE SYMPOSIUM ON SPREAD SPECTRUM TECHNIQUES AND APPLICATIONS (6TH ISSSTA), PARSIPPANY, N, Seiten 1-5 vol.1, XP002257233 2000, Piscataway, NJ, USA, IEEE, USA ISBN: 0-7803-6560-7 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Generieren eines Sendesignalvektors in einem Funk-Kommunikationssystem mit mindestens einer Sendestation und mindestens einer Empfangsstation nach dem Oberbegriff des Anspruchs 1.

Die Erfindung betrifft ferner ein mindestens eine Sendestation und mindestens zwei Empfangsstationen umfassendes Funkkommunikationssystem nach dem Oberbegriff des Anspruchs 7.

In Funk-Kommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für das eingeführte GSM-Mobilfunksystem (Global System for Mobile Communication) werden Frequenzen bei 900, 1800 und 1900 MHz genutzt. Für zukünftige Mobilfunksysteme mit CDMA-oder TD/CDMA-Übertragungsverfahren, wie beispielsweise UMTS (Universal Mobile Telecommunication System) oder andere Systeme der 3. Generation, sind Frequenzen im Frequenzband von ca. 2000 MHz vorgesehen.

Der Zugriff von Stationen auf das gemeinsame Übertragungsmedium wird bei diesen Funk-Kommunikationssystemen durch Vielfachzugriffsverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Stationen aufgeteilt werden. Dabei findet häufig (zum Beispiel bei GSM [Global System for Mobile Communications], TETRA [Terestrial Trunked Radio], DECT [Digital Enhanced Cordless Telecommunication], UMTS [Universal Mobile Telecommunication System]) eine Unterteilung des Übertragungsmediums in Frequenz- und/oder Zeitkanäle entsprechend der Funkschnittstelle statt. Diese Kanäle werden allgemein als Übertragungskanäle oder Funkkanäle bezeichnet. Bei dezentral koordinierten Systemen wird anhand von Messungen über die Verwendbarkeit dieser Übertragungskanäle entschieden. Entsprechend der Funkausbreitung, das heißt abhängig von der Funkfelddämpfung, ist auch eine Wiederverwendung dieser Übertragungskanäle in einem entsprechenden räumlichen Abstand möglich.

Bei der Funkübertragung zwischen einer Sendestation und mindestens einer Empfangsstation eines Funk-Übetragungssystems kommt es nun infolge der Frequenzselektivität der Übertragungskanäle zu Interferenzerscheinungen, die als Intersysmbolinterferenz und Vielfachzugriffsinterferenzen bekannt sind. Diese Interferenzen verzerren die Sendesignale umso stärker, je größer die Übertragungsbandbreite des Übertragungskanal ist.

Herkömmlicherweise werden die Sendesignale an der Sendestation ohne Berücksichtigung der wirksamen Funkkanäle generiert. Die dann auftretenden Interferenzerscheinungen werden in einem zweiten Schritt, zumindest näherungsweise, durch entsprechende angepasste und im allgemeinen sehr aufwendige Verfahren zum Detektieren der übertragenen Daten an den Empfangsstationen beseitigt.

Es sind Funkkommunikationssystem mit mindestens einer Sendestation (Access Point AP bzw. Basisstation) und mindestens zwei Empfangsstationen (Mobile Terminal MT) bekannt, wobei die Sendestation (AP) und die Empfangsstationen (MT) über eine Funkkommunikations-Schnittstelle miteinander verbunden sind. Dabei weisen die Sendestation eine Sendeantenne mit $K_B$ Antennenelementen mit $K_B \geq 1$ und die Empfangsstationen jeweils eine Sendeantenne mit $K_M$ Antennenelementen mit $K_M \geq 1$ auf. Sie kommunizieren über eine MIMO-Übertragung (Multiple Input - Multiple Output MIMO).

Funkübertragungseinrichtungen mit zumindest einer Sendestation mit mehreren Sendeelementen und mindestens einer Empfangsstation mit mehreren Empfangsantennen werden im folgenden als MIMO-Systeme bezeichnet. Bei der Funkübertragung zwischen mindestens einer Sendestation und mindestens einer Empfangsstation eines MIMO-Systems kommt es infolge der Frequenzselektivität der Übertragungskanäle zu Interferenzerscheinungen, die als Intersymbolinterferenz und Vielfachzugriffsinterferenz bekannt sind. Zum Zwecke der Funkübertragung von mindestens einer Sendestation zu den Empfangsstationen in einem MIMO-System sind prinzipiell zwei Voraussetzungen zu erfüllen:

- von der jeweiligen Sendestation sind für jede der Sendeantennen geeignete Sendesignale zu generieren und abzustrahlen, sowie
- von jeder der Empfangsstation sind durch geeignete Verarbeitung der Empfangssignale aller Empfangsantennen die jeweils interessierenden Daten zu detektieren.

In den letzten Jahren wurden alternative Konzepte, wie zum Beispiel Joint Transmission oder Joint Predistortion untersucht, die durch Berücksichtigung der wirksamen Übertragungskanäle bereits beim Generieren der Sendesignale an der Sendestation die Interferenzerscheinungen ganz, im wesentlichen oder zumindest teilweise eliminieren.

- M. Meurer, P.W. Baier, T. Weber, Y. Lu, A. Papathanassiou, "Joint Transmission, an advantageous downlink concept for CDMA mobile radio system using time division duplexing", IEE Electronics Letters, Bd. 36, 2000, S. 900-901 [1] und

- P.W. Baier, M. Meurer, T. Weber, H. Tröger, "Joint Transmission (JT), an alternative rationale for the downlink of time division CDMA using multi-element transmit antennas", Proc. IEEE 7th International Symposium on Spread Spectrum Techiques & Applications (ISSSTA'2000), Parsippany/New Jersey, 2000, S. 1-5 [2]

stellen zum Beispiel ein Joint Transmission (JT) Übertragungsverfahren vor, insbesondere für die Abwärtsstrecke von Mobilfunksystemen von der Basisstation zu den Teilnehmerstationen, welches das gleichzeitige Versorgen mehrerer Teilnehmer ermöglicht. Die von den Sendeantennen der Basisstation bzw. Sendestation (AP) abgestrahlten Sendesignale werden dabei in einem gemeinsamen Prozess generiert und im Hinblick auf die dabei aufzuwendende Sendeenergie optimiert.

In Joint-Transmission-Systemen mit mindestens einer Sendestation mit mindestens einer Sendeantenne und zumindest einer Empfangsstation mit mindestens einer Empfangsantenne wird die lineare empfängerseitige Signalverarbeitung, im folgenden Demodulation genannt, durch empfangsstationsspezifische Demodulatormatrizen beschrieben [2].

In herkömmlichen Joint-Transmission-Systemen [2] werden die teilnehmerspezifischen Demodulationsmatrizen durch feste Signaturen, z.B. CDMA-Codes bestimmt. Dieses Vorgehen ist insbesondere dadurch bestimmt, dass keine Informationen über die räumliche und zeitlichen Übertragungseigenschaften der zwischen Sendestationen und Empfangsstationen wirksamen Mobilfunkkanäle in den Entwurf der teilnehmerspezifischen Demodulationsmatrizen einfließen.

Ähnlich zu dem Vorgehen beim Verfahren Joint Transmission (JT), lassen sich auch beim Einsatz von Empfangsstationen mit mehreren Empfangsantennen unter Verwenden von

- Informationen über die wirksamen Funkkanäle und
- Informationen über die a priori festgelegten empfangsstationsspezifischen Verarbeitungsverfahren zum Detektieren

solche Sendesignale generieren, die die auftretenden oben angesprochenen Interferenzerscheinungen schon beim Senden theoretisch perfekt eliminiert.

Aus M. Meurer et al. "Synthesis of joint detection ans joint transmission in CDMA downlinks", Electronics Letter, 5. Juli 2001, Vol. 37, Nr. 14, IEE 2001, S919-920 ist eine Synthese aus zwei gegensätzlichen Konzepten nämlich der "joint detection" und der "joint transmission" bekannt. Der dortige Vorschlag basiert auf dem Minimieren der Energie des übertragenen Signals, während gleichzeitig die Struktur von herkömmlichen JD Empfängern und die Qualität der detektierten Daten aufrecht erhalten wird.

Aus der EP 0 801 473 ist ein adaptives Hochgeschwindigkeits-Datenübertragungssystem bekannt, wobei der Sender des Systems eine Mehrzahl von Sendeantennen verwendet, welche einen steuerbaren Offset aufweisen.

Der Erfindung liegt daher die Aufgabe zugrunde, ein Verfahren und eine verbesserte Sendeeinrichtung aufzuzeigen, welche für die wirksamen Übertragungskanäle sowohl eine Minimierung der Sendeleistung als auch noch weitere Gütekriterien, wie zum Beispiel eine Richtcharakteristik des Sendesignals, berücksichtigen.

Diese Aufgabe wird durch ein Verfahren mit den Merkmalen nach Anspruch 1 und ein Funkkommunikationssystem mit den Merkmalen nach Anspruch 7 gelöst.

Ausgestaltungen und Weiterbildungen der Erfindung sind Gegenstand der Unteransprüche.

Erfindungsgemäß werden von den Antennenelementen der Sendeantenne der Sendestation abgestrahlte Sendesignale in einem gemeinsamen Prozess generiert und im Hinblick auf die beim Abstrahlen aufzuwendende Sendeenergie angepasst, wobei von den Antennenelementen der Empfangsantennen der Empfangsstationen empfangenen Empfangssignale in einer linearen Signalverarbeitung detektiert werden.

Mit Vorteil können die Einzelsignale für die Antennenelementen der Sendeantenne der Sendestation mit Hilfe einer Modulatormatrix $\underline{M}$ vor der Abstrahlung berechnet werden.

Dabei kann insbeosndere ein Sendesignalvektor $\underline{t} = \underline{M} \cdot \underline{d}$ durch im wesentlichen lineare Modulation mindestens eines zu übertragenden Datenvektors $\underline{d}$ mit der Modulatormatrix $\underline{M}$ generiert werden.

Insbesonder kann bei der linearen empfängerseitigen Signalverarbeitung empfamgssationsspezifische Demodulatormatrizen $\underline{D}$ eingesetzt werden.

Mit Vorteil sind jede Sendestation (AP) und jede Empfangsstation (MT) über mindestens einen durch eine Kanalmatrix $\underline{H}$ charakterisierten Funkkanal verbunden.

Die in der Modulatormatrix $\underline{M}$ enthaltene Systemmatrix $\underline{B} = \underline{D} \cdot \underline{H}$ ist bevorzugt durch das Produkt aus Demodulatormatrix $\underline{D}$ und Kanalmatrix $\underline{H}$ gegeben.

Beim erfindungsgemäßen Funkkommunikationssystem, bei dem die Sendestation eine Sendeantenne mit KB Antennenelementen mit KB ≥ 2 und die Empfangsstationen jeweils eine Sendeantenne mit KM Antennenelementen mit KM ≥ 2 aufweisen, sind Mittel zum Generieren der von den Antennenelementen der Sendeantenne der Sendestation (AP) abgestrahlten Sendesignale in einem gemeinsamen Prozess und zum Anspassen im Hinblick auf die beim Abstrahlen aufzuwendende Sendeenergie, sowie Mittel zum Detektieren der von den Antennenelementen der Empfangsantennen der Empfangsstationen empfangenen Empfangssignale in einer linearen Signalverarbeitung vorgesehen.

Das erfindungsgemäße Funkkommunikationssystem eignet sich insbesondere zur Durchführung eines erfindungsgemäßen Verfahrens.

Die Erfindung kombiniert in einem Mehrteilnehmer (Multi-User) MIMO Übertragungssystem auf einer Kombination einerseits:

- das Generieren von sendestationsspezifischen Sendesignalen gemäß Joint Transmission und andererseits:

- die Demodulation unter Berücksichtigung von Informationen über die räumlichen und zeitlichen Übertragungseinrichtungen der zwischen den Sendestationen und Empfangsstationen wirksamen Mobilfunkkanäle.

Technische Umsetzungen dieses neuartigen kombinierten Verfahrens erlauben die Vorteile beider Vorgehensweise gewinnbringend zu nutzen.

Es können Informationen über die räumlichen und zeitlichen Übertragungseigenschaften der zwischen Sendestationen und Empfangsstationen wirksamen Mobilfunkkanäle beim Ermitteln der empfangsstationsspezifischen Demodulation berücksichtigt werden.

Das Einbeziehen von Kanaleigenschaften bietet unter anderem folgende Vorteile:

- Reduktion der totalen Sendeenergie,
- Vermeiden von Kombinationen aus Mobilfunkkanälen und fehlangepassten Demodulationsmatrizen,
- Verbesserung der Interzell-Interferenzsituation in zellularen Joint-Transmission-Systemen,
- Reduktion der SNR-Degradation (siehe [3]),
- Steigerung der Transmission-Efficiency (siehe [3]),
- Steigerung der Systemkapazität.

Näheres kann dazu beispielsweise aus

• H. Tröger, T. Weber, M. Meurer, P.W. Baier, "Performance Assessment of Joint Transmission (JT) Multi-User Downlink with Multi-Element Transmit Antennas", European Transmission on Telecommunications, ETT Vol. 12, No. 5, September/October 2001 [3],

entnommen werden.

Einzelheiten und Details der Erfindung werden nachfolgend anhand von Anwendungsbeispielen näher erläutert.

Hierbei zeigen:

Fig. 1: ein Systemmodell eines erfindungsgemäßen MIMO JT Systems,

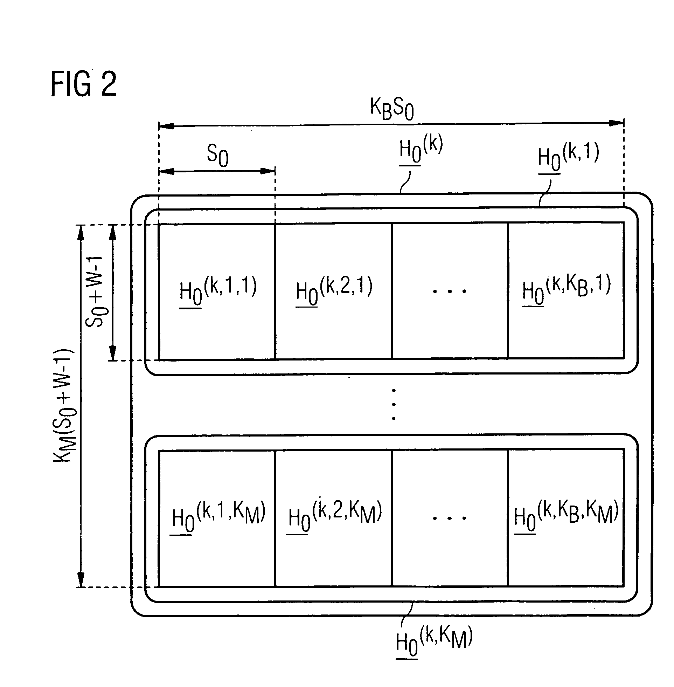

Fig. 2: die Struktur einer Kanalmatrix $\overline{H}_0^{(k)}$ nach Gleichung (21) unten,

Fig. 3: die Struktur einer Kanalmatrix $\underline{D}^{(k)}$ nach Gleichung (38) unten.

Joint Transmission (JT) ist ein vielversprechendes Übertragungsverfahren für die Abwärtsstrecke [1, 2, 3], das für Mobilfunksysteme vorgeschlagen wird, die das hybride Vielfachzugriffsverfahren TDMA/CDMA benutzen. Bei JT werden die Übertragungssignale vorteilhafterweise gemeinsam für alle Empfangsstationen MT erzeugt. JT setzt auf vorbestimmten Demodulatoren auf [?]. Auf Grundlage der Eigenschaften dieser Demodulatoren und der Kanalimpulsantworten wird der Modulator in der Sendestation AP a posteriori so bestimmt, dass Intersymbolinterferenzen (ISI) und Vielfachzugriffsinterferenzen (MAI - Multiple Access Interference) vollständig eliminiert werden. Bis jetzt werden bei den Untersuchungen von JT Mehrelementantennen nur an der Sendestation AP in Betracht gezogen. Aus numerischen Untersuchungen [3] sind die Nutzen von Sendeantennengruppen ersichtlich. Die vorliegende Erfindung betrifft JT bei Übertragungssystemen mit mehreren Teilnehmern, wo Mehrelementantennen sowohl an der Sendestation AP als auch den Empfangsstationen MT benutzt werden. Ein Systemmodell eines solchen MIMO-JT-Verfahrens wird nachstehend vorgestellt.

Signalübertragungsmodell von MIMO-Systemen mit mehreren Teilnehmern

An der AP wird eine Gruppe von $K_B$ Sendeantennenelementen benutzt und an jeder MT $\mu_k$, $k = 1 ... K$ wird eine Gruppe von $K_M$ Empfangsantennenelementen aufgestellt. Die Kanalimpulsantworten

$$\underline{h}^{(k,k_B,k_M)} = \left(\underline{h}_1^{(k,k_B,k_M)} \ldots \underline{h}_W^{(k,k_B,k_M)}\right)^T, \ k = 1\ldots K, \ k_B = 1\ldots K_B, \ k_M = 1\ldots K_M, \quad (1)$$

der Dimension $W$ charakterisieren den Mobilfunkkanal zwischen dem Sendeantennenelement $k_s$ und dem Empfangsantennenelement $k_M$ von MT $\mu_k$. In jedes der $K_a$ Sendeantennenelemente wird das sendeantennenspezifische Sendesignal

$$\underline{t}^{(k_B)} = \left(\underline{t}_1^{(k_B)} \ldots \underline{t}_S^{(k_B)}\right)^T, \ k_B = 1\ldots K_B, \quad (2)$$

der Dimension $S$ eingespeist. Die $K_B$ antennenspezifischen Sendesignale $\underline{t}^{(k_B)}$ von (2) können zusammengestellt werden, um das Gesamt-Sendesignal

$$\underline{t} = \left(\underline{t}^{(1)T} \ldots \underline{t}^{(K_B)T}\right)^T \quad (3)$$

der Dimension $K_B S$ bilden. Mit den Kanalimpulsantworten $\underline{h}^{(k,k_B,k_M)}$ von (1) können die MT- und antennenspezifischen Kanalfaltungsmatrizen

$$\begin{aligned} \underline{H}^{(k,k_B,k_M)} &= \left(\underline{H}_{i,j}^{(k,k_B,k_M)}\right), \ i = 1\ldots S+W-1, \ j = 1\ldots S, \\ \underline{H}_{i,j}^{(k,k_B,k_M)} &= \begin{cases} \underline{h}_{i-j+1}^{(k,k_B,k_M)} & 1 \leq i-j+1 \leq W, \\ 0 & \text{sonst.} \end{cases} \\ k &= 1\ldots K, \ k_B = 1\ldots K_B, \ k_M = 1\ldots K_M, \end{aligned} \quad (4)$$

gebildet werden. $\underline{H}^{(k,k_B,k_M)}$ von (4) besitzt die Dimension $(S+W-1) \times S$.

Mit $\underline{t}^{(k_B)}$ von (2) und $\underline{H}^{(k,k_B,k_M)}$ von (4) läßt sich das an der Empfangsantenne $k_M$ von MT $\mu_k$ empfangene Signal ausdrücken als Vektor

$$\begin{aligned} \underline{r}^{(k,k_M)} &= \sum_{k_B=1}^{K_B} \underline{H}^{(k,k_B,k_M)} \underline{t}^{(k_B)} \\ &= \underbrace{\left(\underline{H}^{(k,1,k_M)} \ldots \underline{H}^{(k,K_B,k_M)}\right)}_{\underline{H}^{(k,k_M)}} \underline{t} \\ &= \underline{H}^{(k,k_M)} \underline{t}, \ k = 1\ldots K, \ k_M = 1\ldots K_M. \end{aligned} \quad (5)$$

$\underline{r}^{(k,k_M)}$ und $\underline{H}^{(k,k_M)}$ besitzen die Dimensionen $(S+W-1) \times 1$ bzw. $(S+W-1) \times (K_B S)$. Als $H^{(k,k_M)}$ wird die MT- und empfangsantennenspezifische Kanalfaltungsmatrix bezeichnet.

Die am MT $\mu_k$, $k = 1 \ldots K$ empfangenen $K_M$ Signale $\underline{r}^{(k,k_M)}$ *von (5)* lassen sich in einem Vektor

$$\underline{r}^{(k)} = \left(\underline{r}^{(k,1)T} \ldots \underline{r}^{(k,K_M)T}\right)^T, \ k = 1\ldots K, \quad (6)$$

der Dimension $K_M$ $(S + W - I)$ anordnen, der als das MT-spezifische Empfangssignal an MT $\mu_k$ bezeichnet wird.

Mit den $[K_M (S + W - 1)]$ x $(K_B S)$ MT-spezifischen Kanalfaltungsmatrizen

$$\underline{H}^{(k)} = \left( \underline{H}^{(k,1)^T} \ldots \underline{H}^{(k,K_M)^T} \right)^T, \quad k = 1 \ldots K, \qquad (7)$$

wird aus dem MT-spezifischen Empfangssignal $r^{(k)}$ von (6)

$$\underline{r}^{(k)} = \underline{H}^{(k)} \underline{t}. \qquad (8)$$

Die K MT-spezifischen Empfangssignale $\underline{r}^{(k)}$ von (6) werden zusammengelegt, um das gesamte Empfangssignal

$$
\begin{aligned}
\underline{r} \;&=\; \left( \underline{r}^{(1)^T} \ldots \underline{r}^{(K)^T} \right)^T \\
&=\; \underbrace{\left( \underline{H}^{(1)^T} \ldots \underline{H}^{(K)^T} \right)^T}_{\underline{H}} \underline{t} \\
&=\; \underline{H}\,\underline{t} \qquad\qquad\qquad (9)
\end{aligned}
$$

zu bilden. $\underline{r}$ und $\underline{H}$ von (9) besitzen die Dimensionen $KK_M (S + W - 1)$ bzw. $[KK_M (S + W - 1)]$ x $(K_B S)$.

**Datenübertragung und -erkennung**

Es wird angenommen, dass TDMA-Burst N Datensymbole von der AP zu der MT $\mu_k$, $k = I \ldots K$ zu übertragen sind. Die für MT $\mu_k$, $k = I \ldots K$ bestimmten $N$ Datensymbole $\underline{d}_n^{k)}$, $k = 1 \ldots N$ sind in dem Datenvektor

$$\underline{d}^{(k)} = \left( \underline{d}_1^{(k)} \ldots \underline{d}_N^{(k)} \right)^T \qquad (10)$$

der Dimension $N$ angeordnet. Die $K$ Datenvektoren $\underline{d}^{(k)}$, $k = I \ldots K$ werden zusammengelegt, um den Gesamt-Datenvektor

$$\underline{d} = \left( \underline{d}^{(1)^T} \ldots \underline{d}^{(K)^T} \right)^T = (\underline{d}_1 \ldots \underline{d}_{KN})^T \qquad (11)$$

der Dimension KN zu bilden. Zur Durchführung der Datenübertragung von der AP zu den MT muß das Gesamt-Sendesignal $\underline{t}$ von (3) durch den Gesamt-Datenvektor $\underline{d}$ von (11) ausgedrückt werden. Bei Annahme einer linearen Modulation läßt sich der Modulationsvorgang ausdrücken als

$$\underline{t} = \underline{M}\,\underline{d}. \qquad (12)$$

Die Matrix $\underline{M}$ wird als Modulatormatrix bezeichnet und besitzt die Dimension $(K_\mathrm{B}S)$ x $(KN)$.

Nach den in [3] angestellten Betrachtungen muß für jede $K$ MT $\mu_k$, $k = 1 \ldots K$ eine Demodulatormatrix $\underline{D}^{(k)}$ der Dimension $N$ x $[K_\mathrm{M}(S + W - 1)]$ vorbestimmt werden und die Gesamt-Demodulatormatrix der Dimension $(KN)$ x $[KK_\mathrm{M}(S + W - 1)]$ ergibt sich dann als

$$\underline{D} = \text{diagonale Blockmatrix} \left( \underline{D}^{(1)} \ldots \underline{D}^{(K)} \right). \tag{13}$$

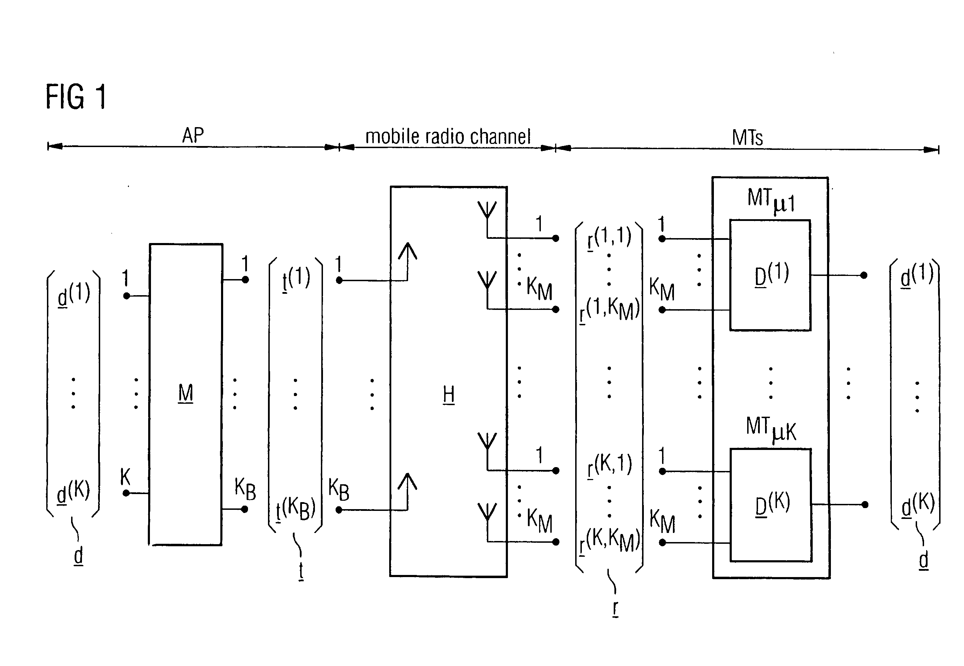

In Figur 1 ist das Systemmodell des MIMO-JT-Verfahrens dargestellt. Im Fall der JT wird die Modulatormatrix $M$ von (12) unter Berücksichtigung der Demodulatormatrix $\underline{D}$ von (13) und der Kanalfaltungsmatrix $\underline{H}$ von (9) so a posteriori bestimmt, dass

$$\underline{d} \stackrel{!}{=} \underline{D}\, \underline{r} = \underline{D}\, \underline{H}\, \underline{t} = \underline{D}\, \underline{H}\, \underline{M}\, \underline{d} \tag{14}$$

gilt. Nach der Darstellung in [1, 2, 3] ist eine Wahlmöglichkeit

$$\underline{M} = (\underline{D}\, \underline{H})^{*T} \left( \underline{D}\, \underline{H}(\underline{D}\, \underline{H})^{*T} \right)^{-1}. \tag{15}$$

In diesem Fall wird für gegebene $\underline{H}$ und $\underline{D}$ die Gesamt-Sendeenergie $\|\underline{t}\|^2/2$ minimiert. Ein bedeutendes Problem bei der Auslegung eines derartigen MIMO-JT-Verfahrens besteht in der Bestimmung der Demodulatormatrix $\underline{D}$, um eine vorteilhafte Systemleistung zu erzielen.

Nachfolgend wird der besseren Übersichtlichkeit wegen ein MIMO-System mit nur einem Teilnehmer betrachtet.

In den bislang durchgeführten Untersuchungen von JT-Systemen werden Vielfachantennen nur an der Sendestation (AP) und nicht an den Empfangsstationen (MT) in Betracht gezogen, das heißt MIMO-Antennenanordnungen werden nicht in die Betrachtungen einbezogen. Der wichtige Punkt bei der Aufnahme derartiger Antennenanordnungen in JT-Systemen ist die Definition einer geeigneten Demodulatormatrix.

**Elementares JT-System mit einer MIMO-Antennenanordnung**

In diesem Abschnitt wird ein elementares JT-System betrachtet, bei dem die AP mit nur einer MT $\mu_k$, $k \, \varepsilon \, \{l \ldots K\}$ aus einem Kollektiv von $K$ MT $\mu_k$, $k = l \ldots K$ kommuniziert und bei dem ein einzelnes Datensymbol zu dieser MT übertragen wird. Diese Situation mit nur einer MT und nur einem Datensymbol wird im folgenden durch den Index "0" angezeigt.

Die betrachtete MIMO-Antennenanordnung besteht aus $K_\mathrm{B}$ Sendeantennen an der AP und $K_\mathrm{M}$ Empfangsantennen an jeder MT $\mu_k$, $k = l \ldots K$. Die Bezeichnungen und Dimensionen der im Verlauf dieses Abschnitts eingeführten Vektoren und Matrizen sind in Tabellen 1 und 2 zusammengestellt.

In jede der $K_\mathrm{B}$ Sendeantennen wird das sendeantennenspezifische Sendesignal

$$\underline{t}_0^{(k,k_\mathrm{B})} = \left( \underline{t}_{0,1}^{(k,k_\mathrm{B})} \ldots \underline{t}_{0,S_0}^{(k,k_\mathrm{B})} \right)^T, \; k_\mathrm{B} = 1 \ldots K_\mathrm{B}, \tag{16}$$

der Dimension $S_0$ eingespeist. Wenn $S_0$ größer als 1 ist, dann ist das übertragene Datensymbol spektral gespreizt. $S_0$ wird daher als Spreizfaktor bezeichnet. Die $K_\mathrm{B}$ antennenspezifischen Sendesignale $\underline{t}_0^{k,k_B)}$ von (16) werden zu dem Gesamt-Sendesignal

$$\underline{t}_0^{(k)} = \left( \underline{t}_0^{(k,1)^{\mathrm{T}}} \cdots \underline{t}_0^{(k,K_{\mathrm{B}})^{\mathrm{T}}} \right)^{\mathrm{T}} \tag{17}$$

der Dimension $K_{\mathrm{B}}S_0$ zusammengestellt.

Der Funkkanal zwischen der Sendeantenne $k_{\mathrm{B}}$ und der Empfangsantenne $k_M$ der MT $\mu_k$ ist durch die Kanalimpulsantwort

$$\underline{h}^{(k,k_{\mathrm{B}},k_{\mathrm{M}})} = \left( \underline{h}_1^{(k,k_{\mathrm{B}},k_{\mathrm{M}})} \cdots \underline{h}_W^{(k,k_{\mathrm{B}},k_{\mathrm{M}})} \right)^{\mathrm{T}} \tag{18}$$

der Dimension $W$ charakterisiert. Mit $\underline{h}^{(k,k_{\mathrm{B}},k_{\mathrm{M}})}$ von (18) läßt sich die MT- und antennenspezifische Kanalmatrix

$$\begin{aligned}
\underline{H}_0^{(k,k_{\mathrm{B}},k_{\mathrm{M}})} &= \left( \underline{H}_{0\ i,j}^{(k,k_{\mathrm{B}},k_{\mathrm{M}})} \right), \ i = 1 \ldots S_0 + W - 1, \ j = 1 \ldots S_0, \\
\underline{H}_{0\ i,j}^{(k,k_{\mathrm{B}},k_{\mathrm{M}})} &= \begin{cases} \underline{h}_{i-j+1}^{(k,k_{\mathrm{B}},k_{\mathrm{M}})} & 1 \le i - j + 1 \le W, \\ 0 & \text{sonst,} \end{cases} \\
k_{\mathrm{M}} &= 1 \ldots K_{\mathrm{M}}, \ k = 1 \ldots K, \ k_{\mathrm{B}} = 1 \ldots K_{\mathrm{B}},
\end{aligned} \tag{19}$$

bilden. $\underline{H}_0^{k,k_B,k_M)}$ besitzt die Dimension $(S_0 + W - 1) \times S_0$.

Mit $\underline{t}_0^{k)}$ von (17) und $\underline{H}_0^{k,k_B,k_M)}$ von (19) läßt sich das an der Empfangsantenne $k_{\mathrm{M}}$ von MT $\mu_k$ empfangene Signal als Vektor

$$\begin{aligned}
\underline{r}_0^{(k,k_{\mathrm{M}})} &= \sum_{k_{\mathrm{B}}=1}^{K_{\mathrm{B}}} \underline{H}_0^{(k,k_{\mathrm{B}},k_{\mathrm{M}})} \underline{t}_0^{(k,k_{\mathrm{B}})} \\
&= \underbrace{\left( \underline{H}_0^{(k,1,k_{\mathrm{M}})} \cdots \underline{H}_0^{(k,K_{\mathrm{B}},k_{\mathrm{M}})} \right)}_{\underline{H}_0^{(k,k_{\mathrm{M}})}} \underline{t}_0^{(k)}, \ k_{\mathrm{M}} = 1 \ldots K_{\mathrm{M}},
\end{aligned} \tag{20}$$

der Dimension $S_0 + W - 1$ ausdrücken. $\underline{H}_0^{k,k_M)}$ in (20) besitzt die Dimension $(S_0 + W - 1) \times (K_{\mathrm{B}}S_0)$. $\underline{r}_0^{k,k_M)}$ von (20) ist ein MT- und empfangsantennenspezifisches Signal. Mit $\underline{r}_0^{k,k_M)}$ wird das an MT $\mu_k$ empfangene Gesamtsignal als

$$\begin{aligned}
\underline{r}_0^{(k)} &= \left( \underline{r}_0^{(k,1)^{\mathrm{T}}} \cdots \underline{r}_0^{(k,K_{\mathrm{M}})^{\mathrm{T}}} \right)^{\mathrm{T}} \\
&= \underbrace{\left( \underline{H}_0^{(k,1)^{\mathrm{T}}} \cdots \underline{H}_0^{(k,K_{\mathrm{M}})^{\mathrm{T}}} \right)^{\mathrm{T}}}_{\underline{H}_0^{(k)}} \underline{t}_0^{(k)} \\
&= \underline{H}_0^{(k)} \underline{t}_0^{(k)}
\end{aligned} \tag{21}$$

erhalten. $\underline{r}_0^{k)}$ und $\underline{H}_0^{k)}$ von (21) besitzen die Dimensionen $K_{\mathrm{M}}(S_0 + W - 1)$ bzw. $[K_{\mathrm{M}}(S_0 + W - 1) \times (K_{\mathrm{B}}S_0)$. In Figur

2 ist die Struktur der Matrix $\underline{H}_0^{k)}$ dargestellt.

Mit $\underline{t}_0^{k)}$ von (2) und $\underline{r}_0^{k)}$ von (21) werden die durch die AP übertragenen und durch MT $\mu_k$ empfangenen Energien zu

$$T_0^{(k)} = \underline{t}_0^{(k)*T} \underline{t}_0^{(k)} \qquad (22)$$

bzw.

$$
\begin{aligned}
R_0^{(k)} &= \underline{r}_0^{(k)*T} \underline{r}_0^{(k)} \\
&= \underline{t}_0^{(k)*T} \underline{H}_0^{(k)*T} \underline{H}_0^{(k)} \underline{t}_0^{(k)}.
\end{aligned}
\qquad (23)
$$

Man fordere nunmehr, dass das Verhältnis $\underline{R}_0^{k)} / \underline{T}_0^{k)}$ von $\underline{R}_0^{k)}$ von (23) und $\underline{T}_0^{k)}$ von (22) durch richtige Wahl von $\underline{t}_0^{k)}$ von (17) maximiert werden soll. Um diese Maximierung zu erreichen, sollte $\underline{t}_0^{k)}$ von (17) wie folgt gewählt werden:

$$\underline{t}_0^{(k)} = \arg\max_{\underline{t}^{(k)}} \left( \frac{\underline{t}_0^{(k)*T} \underline{H}_0^{(k)*T} \underline{H}_0^{(k)} \underline{t}_0^{(k)}}{\underline{t}_0^{(k)*T} \underline{t}_0^{(k)}} \right), \qquad (24)$$

was einem Rayleigh-Quotienten entspricht. Mit $\underline{H}_0^{k)}$ von (21) ist das durch (24) bestimmte Sendesignal $\underline{t}_0^{k)}$ der Eigenvektor $\underline{u}_0^{k)}$ der Matrix $\underline{H}_0^{k)\tau}$ wobei $\underline{H}_0^{k)}$ zum größten Eigenwert dieser Matrix gehört, das heißt

$$\underline{t}_0^{(k)} = \underline{u}_0^{(k)}. \qquad (25)$$

Durch Substitution von $\underline{t}_0^{k)}$ von (25) in (21) ergibt sich das Gesamt-Empfangssignal

$$\underline{r}_0^{(k)} = \underline{H}_0^{(k)} \underline{u}_0^{(k)}. \qquad (26)$$

Der beste Demodulator für dieses Signal ist ein signalangepaßtes Filter, das mit $\underline{r}_0^{k)}$ von (21) zu der Demodulatormatrix

$$\underline{D}_0^{(k)} = \underline{r}_0^{(k)\bullet T}$$
$$= \underline{u}_0^{(k)\bullet T} \underline{H}_0^{(k)\bullet T}$$
$$= \left( \underline{D}_0^{(k,1)} \dots \underline{D}_0^{(k,K_M)} \right) \quad (27)$$

$$= \left( \underline{D}_{0,\,1}^{(k)} \dots \underline{D}_{0,\,K_M(S_0+W-1)}^{(k)} \right) \quad (28)$$

der Dimension 1 x [$K_M$ ($S_0$+$W$- 1)] führt, wo die empfangsantennenspezifischen Demodulatormatrizen

$$\underline{D}_0^{(k,k_M)} = \underline{r}_0^{(k,k_M)\bullet T}, \quad k_M = 1 \dots K_M, \quad (29)$$

die Dimension 1 x ($S_0$ + $W$ - 1) besitzen.

Vielfach-MT-JT-System mit mehreren Symbolen mit einer MIMO-Antennenanordnung

a) Übertragungsmodell

Man betrachte nunmehr die realistischere Situation, dass die AP gleichzeitig mit allen $K$ MT $\mu_k$, $k$ = 1 ... $K$ kommuniziert und dass statt nur einem Datensymbol pro MT $N$ > 1 Datensymbole übertragen werden, wobei jedes dieser Datensymbole durch den bereits im Abschnitt 2 eingeführten Faktor $S_0$ spektral gespreizt ist.

Tabelle 1. Bezeichnungen und Dimensionen der in Abschnitt 2 eingeführten Vektoren.

| Vektor | Bezeichnung | Dimension |
|---|---|---|
| $\underline{t}_0^{(k,k_B)}$ | MT- und sendeantennen-spezifisches Sendesignal | $S_0$ |
| $\underline{t}_0^{(k)}$ | MT-spezifisches Sendesignal | $K_B S_0$ |
| $\underline{h}^{(k,k_B,k_M)}$ | MT- und antennenspezifische Kanalimpulsantwort | $W$ |
| $\underline{r}_0^{(k,k_M)}$ | MT- und empfangsantennen-spezifisches Empfangssignal | $S_0 + W$ - 1 |
| $\underline{r}_0^{(k)}$ | MT-spezifisches Empfangssignal | $K_M(S + W - 1)$ |
| $\underline{u}_0^{(k)}$ | Zum größten Eigenwert gehörender Eigenvektor von $\underline{H}^{(k)*T} \underline{H}^{(k)}$ | $K_B S_0$ |

Tabelle 2. Bezeichnungen und Dimensionen der in Abschnitt 2 eingeführten Matrizen.

| Matrix | Bezeichnung | Dimension |
|---|---|---|
| $\underline{H}_0^{(k,k_B,k_M)}$ | MT- und antennenspezifische Kanalmatrix | $(S_0 + W - 1)$ x $S_0$ |
| $\underline{H}_0^{(k,k_M)}$ | MT- und empfangsantennenspezifische Kanalmatrix | $(S_0 + W - 1)$ x $(K_B S_0)$ |

(fortgesetzt)

| Matrix | Bezeichnung | Dimension |
|---|---|---|
| $\underline{H}_0^{k)}$ | MT-spezifische Kanalmatrix | $[K_M(S_0 + W - 1)] \times (K_B S_0)$ |
| $\underline{D}_0^{k)}$ | MT-spezifische Demodulatormatrix | $1 \times [K_M(S_0 + W - 1)]$ |
| $\underline{D}_0^{k, k_M)}$ | MT- und empfangsantennenspezifische Demodulatormatrix | $1 \times (S_0 + W - 1)$ |

Wie zuvor ist die AP mit $K_B$ Sendeantennen ausgerüstet und jede MT $\mu_k$ weist $K_M$ Empfangsantennen auf. Im folgenden werden zuerst die in Abschnitt 2 eingeführten Signalbeschreibungen an diese neue Situation angepaßt.

Danach wird auf Grundlage der Demodulatormatrizen $\underline{D}_0^{k)}$ von (27) eine Demodulatormatrix $\underline{D}$ erzeugt. Die im Verlauf des Abschnitts 3 eingeführten Bezeichnungen und Dimensionen der Vektoren und Matrizen sind in Tabellen 3 bzw. 4 zusammengestellt.

Anstatt $\underline{t}_0^{k, k_B)}$ von (16) gibt es das sendeantennenspezifische Sendesignal

$$\underline{t}^{(k_B)} = \left(\underline{t}_1^{(k_B)} \ldots \underline{t}_S^{(k_B)}\right)^T, \; k_B = 1 \ldots K_B, \tag{30}$$

der Dimension

$$S = N S_0, \tag{31}$$

und anstatt $\underline{t}_0^{k)}$ von (17) ergibt sich das Gesamt-Sendesignal

$$\underline{t} = \left(\underline{t}^{(1)T} \ldots \underline{t}^{(K_B)T}\right)^T \tag{32}$$

der Dimension $K_B S$.

Anstatt $\underline{H}_0^{(k, k_B, k_M)}$ von (19) ergibt sich die MT- und antennenspezifische Kanalmatrix

$$\begin{aligned}
\underline{H}^{(k, k_B, k_M)} &= \left(\underline{H}_{i,j}^{(k, k_B, k_M)}\right), \; i = 1 \ldots S + W - 1, \; j = 1 \ldots S, \\
\underline{H}_{i,j}^{(k, k_B, k_M)} &= \begin{cases} \underline{h}_{i-j+1}^{(k, k_B, k_M)} & 1 \le i - j + 1 \le W, \\ 0 & \text{sonst,} \end{cases} \\
k_M &= 1 \ldots K_M, \; k = 1 \ldots K, \; k_B = 1 \ldots K_B.
\end{aligned} \tag{33}$$

$\underline{H}_0^{k, k_B, k_M)}$ von (33) besitzt die Dimension $(S + W - 1) \times S$.

Anstatt $\underline{r}_0^{(k,k_M)}$ von (20) ergibt sich mit $\underline{t}$ von (32) und $\underline{H}_0^{(k,k_B,k_M)}$ von (33) das MT- und empfangsantennenspezifische Empfangssignal

$$
\begin{aligned}
\underline{r}^{(k,k_M)} &= \sum_{k_B=1}^{K_B} \underline{H}^{(k,k_B,k_M)}\underline{t}^{(k_B)} \\
&= \underbrace{\left(\underline{H}^{(k,1,k_M)}\ldots\underline{H}^{(k,K_B,k_M)}\right)}_{\underline{H}^{(k,k_M)}}\underline{t}.
\end{aligned}
\tag{34}
$$

$\underline{r}^{(k,k_M)}$ und $\underline{H}^{(k,k_M)}$ von (34) besitzen die Dimensionen $(S + W - 1)$ bzw. $(S + W - 1)$ x $(K_B S)$.

Mit $\underline{H}^{(k,k_M)}$ von (34) und $\underline{t}$ von (32) läßt sich das durch MT $\mu_k$ empfangene Gesamtsignal folgendermaßen schreiben:

$$
\begin{aligned}
\underline{r}^{(k)} &= \left(\underline{r}^{(k,1)^T}\ldots\underline{r}^{(k,K_M)^T}\right)^T \\
&= \underbrace{\left(\underline{H}^{(k,1)^T}\ldots\underline{H}^{(k,K_M)^T}\right)^T}_{\underline{H}^{(k)}}\underline{t} \\
&= \underline{H}^{(k)}\underline{t}.
\end{aligned}
\tag{35}
$$

$\underline{r}^{(k)}$ und $\underline{H}^{(k)}$ von (35) besitzen die Dimensionen $K_M (S + W - 1)$ bzw. $[K_M (S + W - 1)]$ x $K_B S$. Als Erweiterung der Betrachtungen in dem vorherigen Abschnitt wird nunmehr ein Gesamt-Empfangssignal

$$
\begin{aligned}
\underline{r} &= \left(\underline{r}^{(1)^T}\ldots\underline{r}^{(K)^T}\right)^T \\
&= \left(\underline{H}^{(1)^T}\ldots\underline{H}^{(K)^T}\right)^T \\
&= \underline{H}\,\underline{t}
\end{aligned}
\tag{36}
$$

mit den $K$ Empfangssignalen $\underline{r}^{(k)}$ von (34) aller $K$ MT $\mu_k$, k = 1 ... $K$ eingeführt. $\underline{r}$ und $\underline{H}$ von (35) besitzen die Dimensionen $KK_M(S + W - 1)$ bzw. $[KK_M(S + W - 1)]$ x $K_B S$.

**b) Bestimmung der Demodulatormatrix $\underline{D}$**

Nach den in [2] angestellten Betrachtungen muß für jede der $K$ MT $\mu_k$, k = I ... $K$ eine Demodulatormatrix $\underline{D}^{(k)}$ der Dimension $N$ x $[K_M(S + W - 1)]$ bestimmt werden und dann ergibt sich die Gesamt-Demodulatormatrix der Dimension $(KN)$ x $[KK_M(S + W - 1)]$ als

$$
\underline{D} = \text{diagonale Blockmatrix}\left(\underline{D}^{(1)}\ldots\underline{D}^{(K)}\right).
\tag{37}
$$

Tabelle 3. Bezeichnungen und Dimensionen der in diesem Abschnitt eingeführten Vektoren.

| Vektor | Bezeichnung | Dimension |
|---|---|---|
| $\underline{t}^{k_a)}$ | sendeantennenspezifisches Sendesignal | $S = NS_0$ |
| $\underline{t}$ | Gesamt-Sendesignal | $K_B S$ |
| $\underline{r}^{k,k_M)}$ | MT- und empfangsantennenspezifisches Empfangssignal | $S + W - 1$ |
| $\underline{r}^{k)}$ | MT-spezifisches Empfangssignal | $K_M(S + W - 1)$ |
| $\underline{r}$ | Gesamt-Empfangssignal | $KK_M(S + W - 1)$ |
| $d$ | Gesamt-Datenvektor | $KN$ |

Tabelle 4. Bezeichnungen und Dimensionen der in diesem Abschnitt eingeführten Matrizen.

| Matrix | Bezeichnung | Dimension |
|---|---|---|
| $\underline{H}^{k,k_a,k_M)}$ | MT- und antennen-spezifische Kanalmatrix | $(S + W - 1) \times S$ |
| $\underline{H}_0^{k,k_M)}$ | MT- und empfangs-antennenspezifische Kanalmatrix | $(S + W - 1) \times (K_B S)$ |
| $\underline{H}^{k)}$ | MT-spezifische Kanalmatrix | $[K_M(S + W - 1)] \times (K_B S)$ |
| $\underline{H}$ | Gesamt- Kanalmatrix | $[KK_M(S + W - 1)] \times (K_B S)$ |
| $\underline{D}^{k)}$ | MT-spezifische Demodulatormatrix | $N \times [K_M(S + W - 1)]$ |
| $\underline{D}$ | Gesamt- Demodulatormatrix | $(KN) \times [KK_M(S + W - 1)]$ |
| $\underline{B}$ | Systemmatrix | $(KN) \times (K_B S)$ |
| $\underline{M}$ | Modulatormatrix | $(K_B S) \times (KN)$ |

Der entscheidende Punkt des Vorschlags zum Aufbauen der Demodulatormatrix $\underline{D}^{(k)}$ unter Berücksichtigung der Kanaleigenschaften liegt in in (27) eingeführten Demodulatormatrizen $\underline{D}_0^{k)}$. Die $N$ Zeilen von $D^{(k)}$ werden als verschobene Versionen von $\underline{D}_0^{k)}$ von (27) entsprechend dem Verfahren

$$'\underline{D}_{i,j}^{(k)} = \left(\underline{D}_{i,j}^{(k)}\right), \quad i = 1 \ldots N, \quad j = 1 \ldots [K_M(S_0 N + W - 1)],$$

$$\underline{D}_{i,j}^{(k)} = \begin{cases} \underline{D}_{0,p}^{(k)}, & 1 \le (j - (i-1)S_0) \bmod (S_0 N + W - 1) \le S_0 + W - 1, \\ 0 & \text{sonst,} \end{cases} \quad (38)$$

erhalten, wobei

$$p = (j - (i - 1)S_0) \bmod (S_0 N + W - 1) + (S_0 + W - 1) \cdot \left[ \frac{j}{S_0 N + W - 1} \right], \quad (39)$$

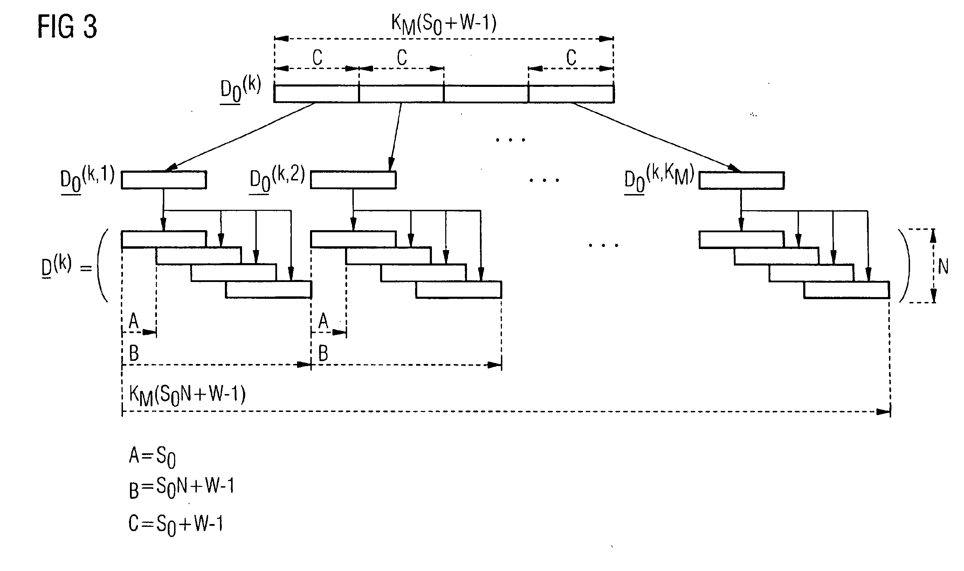

und [] den Ganzzahlteil bezeichnet. Die Struktur von $\underline{D}^{(k)}$ von (38) ist in Figur 3 dargestellt.

Mit den K Matrizen $\underline{D}^{(k)}$ von (38) läßt sich $\underline{D}$ von (37) bilden. Mit $\underline{D}$ von (37) und $\underline{H}$ von (36) wird die Systemmatrix

$$\underline{B} = \underline{D}\,\underline{H} \qquad (40)$$

der Dimension $KN$ x $K_B S$ erhalten. Wie in [2] dargestellt, läßt sich nunmehr das Gesamt-Sendesignal $\underline{t}$ von (22) und der Gesamt-Datenvektor $\underline{d}$ [2] der Dimension KN als

$$\underline{t} = \underbrace{\underline{B}^{\bullet T}(\underline{B}\,\underline{B}^{\bullet T})^{-1}}_{\underline{M}}\underline{d}$$
$$= \underline{M}\,\underline{d} \qquad (41)$$

erhalten, wobei die Modulatormatrix $\underline{M}$ von (41) die Dimension $(K_B S)$ x $(KN)$ besitzt.

**Patentansprüche**

1. Verfahren zur Übertragung von Informationen in einem Funkkommunikationssystem mit mindestens einer Sendestation (AP) und mindestens zwei Empfangsstationen (MT),
   wobei die Sendestation (AP) und die Empfangsstationen (MT) über eine Funkkommunikations-Schnittstelle miteinander verbunden sind, und
   wobei die Sendestation (AP) eine Sendeantenne mit $K_B$ Antennenelementen mit $K_B \geq 2$ und die Empfangsstationen (MT) jeweils eine Empfangsantenne mit $K_M$ Antennenelementen mit $K_M \geq 2$ aufweisen,
   wobei von den Antennenelementen der Sendeantenne der Sendestation (AP) abgestrahlte Sendesignale in einem gemeinsamen Prozess generiert und im Hinblick auf die beim Abstrahlen aufzuwendende Sendeenergie angepasst werden und von den Antennenelementen der Empfangsantennen der Empfangsstationen (MT) empfangene Empfangssignale in einer linearen Signalverarbeitung mittels einer Demodulation unter Berücksichtigung von räumlichen und zeitlichen Übertragungseigenschaften zwischen der Sendestation (AP) und der jeweiligen Empfangsstation (MT) detektiert werden,
   **dadurch gekennzeichnet, dass** ein empfangstationsspezifisches Sendesignal $\underline{t}.^{(k)}$ einem Rayleigh-Quotienten entspricht.

2. Verfahren nach Anspruch 1,
   **dadurch gekennzeichnet,**
   **dass** die Einzelsignale für die Antennenelemente der Sendeantenne der Sendestation (AP) mit Hilfe einer Modulatormatrix $\underline{M}$ vor der Abstrahlung berechnet werden.

3. Verfahren nach Anspruch 2,
   **dadurch gekennzeichnet,**
   **dass** ein Sendesignalvektor $\underline{t} = \underline{M} \cdot \underline{d}$ durch eine lineare Modulation mindestens eines zu übertragenden Datenvektors $\underline{d}$ mit der Modulatormatrix $\underline{M}$ generiert wird.

4. Verfahren nach einem vorhergehenden Anspruch,
   **dadurch gekennzeichnet,**
   **dass** bei der linearen empfängerseitigen Signalverarbeitung empfangsstationsspezifische Demodulatormatrizen $\underline{D}$

eingesetzt werden.

5. Verfahren nach einem vorhergehenden Anspruch
**dadurch gekennzeichnet,**
**dass** jede Sendestation (AP) und jede Empfangsstation (MT) über mindestens einen durch eine Kanalmatrix $\underline{H}$ charakterisierten Funkkanal verbunden ist.

6. Verfahren nach Anspruch 2,
**dadurch gekennzeichnet,**
**dass** die in der Modulatormatrix $\underline{M}$ enthaltene Systemmatrix $\underline{B} = \underline{D} \cdot \underline{H}$ durch das Produkt aus einer Demodulatormatrix $\underline{D}$ und Kanalmatrix $\underline{H}$ gegeben ist.

7. Funkkommunikationssystem, insbesondere zur Durchführung eines Verfahrens nach einem der vorstehenden Ansprüche, umfassend mindestens eine Sendestation (AP) und mindestens zwei Empfangsstationen (MT),
wobei die Sendestation (AP) und die Empfangsstationen (MT) über eine Funkkommunikations-Schnittstelle miteinander verbunden sind,
wobei die Sendestation (AP) eine Sendeantenne mit KB Antennenelementen mit KB $\geq$ 2 und die Empfangsstationen (MT) jeweils eine Empfangsantenne mit KM Antennenelementen mit KM $\geq$ 2 aufweisen, wobei
in der Sendestation (AP) Mittel zum Generieren von von den Antennenelementen der Sendeantenne der Sendestation (AP) abgestrahlten Sendesignale in einem gemeinsamen Prozess und zum Anpassen im Hinblick auf die beim Abstrahlen aufzuwendende Sendeenergie, und
in den Empfangsstationen (MT) jeweils Mittel zum Detektieren der von den Antennenelementen der Empfangsantennen der Empfangsstationen (MT) empfangenen Empfangssignale in einer linearen Signalverarbeitung mittels einer Demodulation unter Berücksichtigung von räumlichen und zeitlichen Übertragungseigenschaften zwischen der Sendestation (AP) und der Empfangsstation (MT) vorhanden sind, **dadurch gekennzeichnet, dass** das Funkkommunikationssystem derart eingerichtet ist, dass ein empfangstationsspezifisches Sendesignal $\underline{t}_o^{(k)}$ einem Rayleigh-Quotienten entspricht.

**Claims**

1. Method for transmission of information in a radio communication system having at least one transmitting station (AP) and at least two receiving stations (MT),
with the transmitting station (AP) and the receiving stations (MT) being connected to one another via a radio communication interface, and
with the transmitting station (AP) having a transmitting antenna with $K_B$ antenna elements where $K_B \geq 2$, and with the receiving stations (MT) each having a receiving antenna with $K_M$ antenna elements where $K_M \geq 2$,
with transmitted signals which are emitted from the antenna elements of the transmitting antenna of the transmitting station (AP) being generated in a common process and being matched with respect to the transmission power to be used for emission, and with received signals received by the antenna elements of the receiving antennas of the receiving stations (MT) being detected using linear signal processing by means of demodulation taking account of spatial and time transmission characteristics between the transmitting station (AP) and the respective receiving station (MT),
**characterized**
**in that** a transmitted signal $t_0^{(k)}$ which is specific to the receiving station corresponds to a Rayleigh quotient.

2. Method according to Claim 1,
**characterized**
**in that** the individual signals for the antenna elements of the transmitting antenna of the transmitting station (AP) are calculated with the aid of a modulator matrix $\underline{M}$ before emission.

3. Method according to Claim 2,
**characterized**
**in that** a transmitted signal vector $\underline{t} = \underline{M} \cdot \underline{d}$ is generated by linear modulation of at least one data vector $\underline{d}$ to be transmitted, using the modulator matrix $\underline{M}.$

4. Method according to one of the preceding claims,
**characterized**

**in that** demodulator matrices $\underline{D}$ which are specific to the receiving station are used for the linear signal processing at the receiver end.

5. Method according to one of the preceding claims,
**characterized**
**in that** each transmitting station (AP) and each receiving station (MT) is connected via at least one radio channel which is **characterized by** a channel matrix $\underline{H}$.

6. Method according to Claim 2,
**characterized**
**in that** the system matrix $\underline{B} = \underline{D} \cdot \underline{H}$ which is contained in the modulator matrix $\underline{M}$ is given by the product of a demodulator matrix $\underline{D}$ and a channel matrix $\underline{H}$.

7. Radio communication system, in particular for carrying out a method according to one of the preceding claims, having at least one transmitting station (AP) and at least two receiving stations (MT),
with the transmitting station (AP) and the receiving stations (MT) being connected to one another via a radio communication interface,
with the transmitting station (AP) having a transmitting antenna with $K_B$ antenna elements where $K_B \geq 2$, and with the receiving stations (MT) each having a receiving antenna with $K_M$ antenna elements where $K_M \geq 2$,
with means being provided in the transmitting station (AP) for generation of transmitted signals, which are emitted from the antenna elements of the transmitting antenna of the transmitting station (AP), in a common process and for matching with respect to the transmission power to be used for emission, and with means being provided in each of the receiving stations (MT) for detection of the received signals received by the antenna elements of the receiving antennas of the receiving stations (MT) using linear signal processing, by means of demodulation taking account of spatial and time transmission characteristics between the transmitting station (AP) and the receiving station (MT),
**characterized**
**in that** the radio communication system is designed such that a transmitted signal $\underline{t}_0^{(k)}$ which is specific to the receiving station corresponds to a Rayleigh quotient.

## Revendications

1. Procédé de transmission d'informations dans un système de radiocommunication comprenant au moins une station émettrice (AP) et au moins deux stations réceptrices (MT),
la station émettrice (AP) et les stations réceptrices (MT) étant reliées les unes aux autres par le biais d'une interface de radiocommunication et
la station émettrice (AP) étant pourvue d'une antenne émettrice comprenant $K_B$ éléments d'antenne, avec $K_B \geq 2$, et les stations réceptrices (MT) étant pourvues à chaque fois d'une antenne réceptrice comprenant $K_M$ éléments d'antenne, avec $K_M \geq 2$,
des signaux d'émission rayonnés par les éléments d'antenne de l'antenne émettrice de la station émettrice (AP) étant générés dans un processus commun et étant adaptés du point de vue de l'énergie d'émission à dépenser lors du rayonnement et des signaux de réception reçus par les éléments d'antenne des antennes réceptrices des stations réceptrices (MT) étant détectés dans un traitement de signal linéaire au moyen d'une démodulation en tenant compte de caractéristiques de transmission spatiales et temporelles entre la station émettrice (AP) et la station réceptrice (MT) respective,
**caractérisé en ce qu'**un signal d'émission $\underline{t}_0^{(k)}$ spécifique d'une station réceptrice correspond à un quotient de Rayleigh.

2. Procédé selon la revendication 1, **caractérisé en ce que** les signaux individuels pour les éléments d'antenne de l'antenne émettrice de la station émettrice (AP) sont calculés avant le rayonnement à l'aide d'une matrice de modulation $\underline{M}$.

3. Procédé selon la revendication 2, **caractérisé en ce qu'**un vecteur de signal d'émission $\underline{t}$ = M.d est généré par une modulation linéaire d'au moins un vecteur de données $\underline{d}$ à transmettre à l'aide de la matrice de modulation $\underline{M}$.

4. Procédé selon l'une des revendications précédentes,
**caractérisé en ce que** des matrices de démodulation $\underline{D}$ spécifiques de stations réceptrices sont utilisées lors du traitement de signal linéaire sur le côté du récepteur.

**5.** Procédé selon l'une des revendications précédentes,
**caractérisé en ce que** chaque station émettrice (AP) et chaque station réceptrice (MT) sont reliées par le biais d'au moins un canal radio **caractérisé par** une matrice de canal $\underline{H}$.

**6.** Procédé selon la revendication 2, **caractérisé en ce que** la matrice de système : $\underline{B} = \underline{D}.\underline{H}$ contenue dans la matrice de modulation $\underline{M}$ est fournie par le produit d'une matrice de démodulation $\underline{D}$ et d'une matrice de canal $\underline{H}$.

**7.** Système de radiocommunication, notamment pour l'exécution d'un procédé selon l'une des revendications précédentes, comprenant au moins une station émettrice (AP) et au moins deux stations réceptrices (MT),
la station émettrice (AP) et les stations réceptrices (MT) étant reliées les unes aux autres par le biais d'une interface de radiocommunication,
la station émettrice (AP) étant pourvue d'une antenne émettrice comprenant KB éléments d'antenne, avec KB ≥ 2, et les stations réceptrices (MT) étant pourvues à chaque fois d'une antenne réceptrice comprenant KM éléments d'antenne, avec KM ≥ 2,
des moyens pour la génération de signaux d'émission rayonnés par les éléments d'antenne de l'antenne émettrice de la station émettrice (AP) dans un processus commun et pour l'adaptation du point de vue de l'énergie d'émission à dépenser lors du rayonnement étant présents dans la station émettrice (AP) et des moyens pour la détection des signaux de réception reçus par les éléments d'antenne des antennes réceptrices des stations réceptrices (MT) dans un traitement de signal linéaire au moyen d'une démodulation en tenant compte de caractéristiques de transmission spatiales et temporelles entre la station émettrice (AP) et la station réceptrice (MT) étant présents à chaque fois dans les stations réceptrices (MT),
**caractérisé en ce que** le système de radiocommunication est adapté de manière à ce qu'un signal d'émission $\underline{t}_0^{(k)}$ spécifique d'une station réceptrice corresponde à un quotient de Rayleigh.

FIG 1

## FIG 2

$K_B S_0$

$S_0$

$\underline{H}_0{}^{(k)}$

$\underline{H}_0{}^{(k,1)}$

$S_0 + W - 1$

$K_M(S_0 + W - 1)$

$\underline{H}_0{}^{(k,1,1)}$     $\underline{H}_0{}^{(k,2,1)}$     $\cdots$     $\underline{H}_0{}^{(k,K_B,1)}$

$\underline{H}_0{}^{(k,1,K_M)}$     $\underline{H}_0{}^{(k,2,K_M)}$     $\cdots$     $\underline{H}_0{}^{(k,K_B,K_M)}$

$\underline{H}_0{}^{(k,K_M)}$

FIG 3

$A = S_0$

$B = S_0 N + W - 1$

$C = S_0 + W - 1$

EP 1 508 207 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0801473 A

### In der Beschreibung aufgeführte Nicht-Patentliteratur

- **M. MEURER ; P.W. BAIER ; T. WEBER ; Y. LU ; A. PAPATHANASSIOU.** Joint Transmission, an advantageous downlink concept for CDMA mobile radio system using time division duplexing. *IEE Electronics Letters,* 2000, vol. 36, 900-901
- **P.W. BAIER ; M. MEURER ; T. WEBER ; H. TRÖGER.** Joint Transmission (JT), an alternative rationale for the downlink of time division CDMA using multi-element transmit antennas. *Proc. IEEE 7th International Symposium on Spread Spectrum Techiques & Applications (ISSSTA'2000,* 2000, 1-5
- **M. MEURER et al.** Synthesis of joint detection ans joint transmission in CDMA downlinks. *Electronics Letter,* 05. Juli 2001, vol. 37 (14), 919-920
- **H. TRÖGER ; T. WEBER ; M. MEURER ; P.W. BAIER.** Performance Assessment of Joint Transmission (JT) Multi-User Downlink with Multi-Element Transmit Antennas. *European Transmission on Telecommunications, ETT,* September 2001, vol. 12 (5